# EUROPÄISCHE PATENTSCHRIFT

(11) **EP 0 775 445 B1**
(45) Veröffentlichungstag und Bekanntmachung des Hinweises auf die Patenterteilung: **04.04.2001**
(21) Anmeldenummer: 96118668.1
(22) Anmeldetag: 21.11.1996
(51) Int. Cl.: A23F 5/38, A23F 3/32, A23P 1/08

(54) **Portionseinheit zur Zubereitung von Getränken**
Portion unit for the preparation of beverages
Portion unitaire pour préparer des boissons

(30) Priorität: 27.11.1995 DE 19544019
(43) Veröffentlichungstag der Anmeldung: 28.05.1997
(73) Patentinhaber: Focke & Co. (GmbH & Co.), 27283 Verden (DE)
(72) Erfinder: Focke, Heinz, 27283 Verden (DE); Gosebruch, Harald, Dr., 27283 Verden (DE)
(74) Vertreter: Bolte, Erich, Dipl.-Ing.

(56) Entgegenhaltungen:
- EP-A- 0 324 072
- DE-A- 3 008 836
- FR-A- 1 305 737
- FR-A- 1 442 282
- FR-A- 2 032 634
- FR-A- 2 644 679
- US-A- 3 620 759
- PATENT ABSTRACTS OF JAPAN vol. 18, no. 529 (M-1684) & JP 06 183456 A (SHIGETOSHI SUZUKI)

## Beschreibung

Die Erfindung betrifft eine Portionseinheit zur Zubereitung von Kaffee- oder Teegetränk, wobei eine Portion eines wasserlöslichen Kaffee- oder Tee-Extrakts in Wasser aufgelöst wird.

Die Zubereitung von Kaffee- oder Teegetränken unter Verwendung von wasserlöslichen Extrakten ist weit verbreitet. Der Extrakt ist üblicherweise in Gläsern verpackt und wird für die Zubereitung des Getränks in der gewünschten Menge entnommen.

Bekannt sind aber auch bereits vorbereitete Portionseinheiten für die Zubereitung derartiger Getränke. Diese bestehen üblicherweise aus einer Umhüllung aus wasserlöslicher Substanz, insbesondere Gelatine. Der Inhalt der Portionspackung kann ein Extrakt sein. Dieser kann auch Zusätze wie Zucker, Milch oder dergleichen enthalten (DE 30 08 836).

Bekannt sind auch bereits Portionseinheiten, bei denen ein äußerer, starrer Hohlkörper aus Zucker mit Kaffee-Extrakt gefüllt ist (FR 2 644 679).

Bekannt ist auch eine Portionseinheit für die Zubereitung von Getränken, bei der wasserlösliches Pulver für die Zubereitung eines Getränks in einer beutelartigen Umhüllung Aufnahme findet. Der Beutel besteht aus einem wasserlöslichen Material (JP6183456).

Der Erfindung liegt die Aufgabe zugrunde, eine Portionseinheit vorzuschlagen, die für die Zubereitung eines Kaffee- oder Teegetränks geeignet ist und eine einfache Handhabung bei der Zubereitung des Getränks gewährleistet.

Zur Lösung dieser Aufgabe ist die erfindungsgemäße Portionseinheit durch folgende Merkmale gekennzeichnet:
a) der Kaffee- oder Tee-Extrakt ist von einer Umhüllung umgeben,
b) die Umhüllung besteht aus einem im Wasser löslichen Material,
c) die Umhüllung besteht ganz oder teilweise aus Milch und/oder Zucker und/oder Aromastoffe.
d) die Umhüllung ist beutelartig ausgestaltet und besteht aus einem V-förmig gefalteten Zuschnitt mit einem Boden, zwei Seitennähten und einer oberen, quergerichteten Verschlußnaht.

Die so ausgebildete Portionseinheit ermöglicht die Zubereitung eines Kaffee- oder Teegetränks, welches unmittelbar zum Verzehr geeignet ist und demgemäß bereits Milch und/oder Zucker und/oder Aromastoffe enthält.

Die beutelförmige Außenumhüllung kann aus einer fortlaufenden Materialbahn durch V-förmiges Falten und durch Anbringen von Längs- und Quernähten gefertigt werden. Der Inhalt des Beutels ist der Kaffee- oder Tee-Extrakt.

Weitere Einzelheiten der Erfindung werden nachfolgend anhand eines Ausführungsbeispiels der Portionseinheit näher erläutert.
Es zeigt:

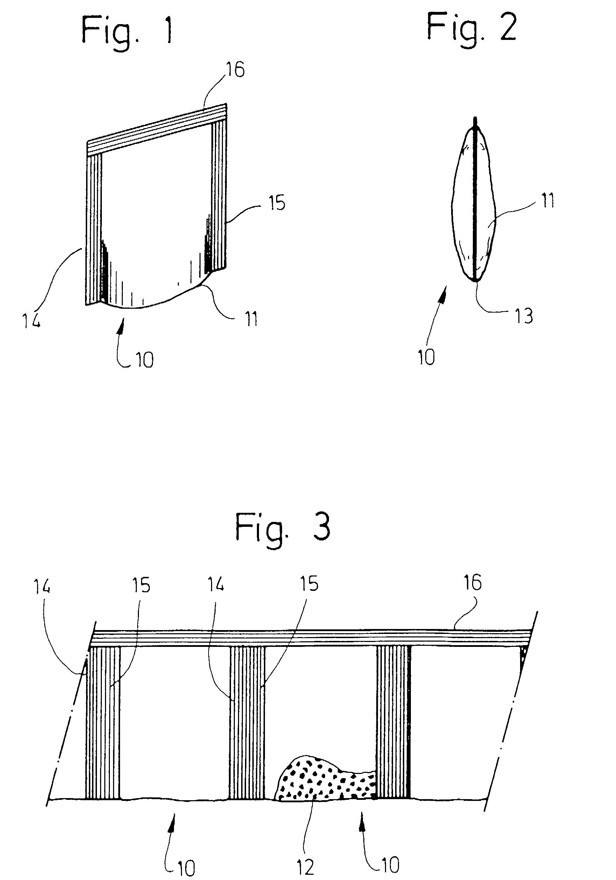

- Fig. 1: ein Ausführungsbeispiel für eine fertige, allseits geschlossene Portionseinheit in perspektivischer Darstellung,
- Fig. 2: eine Portionseinheit gemäß Fig. 1 in Queransicht,
- Fig. 3: eine Materialbahn zur Bildung von Umhüllungen der Portionseinheit.

Bei dem gezeigten Ausführungsbeispiel einer Portionseinheit 10 geht es um die Zubereitung von Kaffee- oder Teegetränken, die durch Übergießen mit einer insbesondere heißen Flüssigkeit, wie Wasser, und Auflösung von Substanzen trinkfertig vorbereitet sind. Die Portionseinheit 10 besteht zu diesem Zweck aus einer beutelartigen Umhüllung 11. Innerhalb der allseits geschlossenen Umhüllung 11 befindet sich eine Portion einer Substanz zum Herstellen des Getränks, beispielsweise einer Portion Kaffee-Extrakt 12. Die Umhüllung 11 besteht ihrerseits aus einem wasserlöslichen Material, so daß die komplette Portionseinheit 10 in einen Behälter eingegeben und durch Übergießen mit Flüssigkeit aufgelöst wird.

Die Umhüllung 11 besteht ganz oder teilweise aus Milch bzw. Milchsubstanzen, Kaffeeweißer, Zucker oder sonstigen Aromastoffen bzw. aus einer Mischung derselben. In diesem Falle bilden die Umhüllung 11 und deren Inhalt, also beispielsweise der Kaffee-Extrakt 12, zusammen eine definierte Portion für die Zubereitung eines kompletten Kaffeegetränks mit Milch und gegebenenfalls Zucker. Alternativ können die Zusatzstoffe, wie Milch/Kaffeeweißer, Zucker und Aromastoffe Bestandteil der im übrigen aus wasserlöslichem Material bestehenden Folie für die Umhüllung 11 sein. Die Zusatzstoffe können dabei in das Material der Umhüllung 11 eingearbeitet oder auf deren Oberfläche angelagert sein.

Die Umhüllung 11 ist beutelartig ausgebildet, und zwar mit einem durch V-förmiges Falten gebildeten Boden 13, zwei parallelen Seitennähten 14, 15 und einer gegenüber zum Boden 13 verlaufenden Verschlußnaht 16. Im Bereich dieser Nähte 14, 15, 16 sind Wandungen der Umhüllung 11 durch Siegeln, Kleben oder auf andere Weise miteinander verbunden.

Vorteilhafterweise werden die Portionseinheiten 10 bzw. deren Umhüllung 11 aus einer fortlaufenden Materialbahn gebildet. Diese wiederum besteht ursprünglich aus einem Streifen des beschriebenen, flüssigkeitslöslichen Materials. Der Streifen wird längsmittig V-förmig gefaltet. Durch Anbringen der Seitennähte 14, 15 entstehen einseitig offene Umhüllungen 11. In diese wird eine dosierte Portion des Kaffee-Extrakts 12 eingefüllt. Danach werden die Umhüllungen 11 durch die fortlaufende Verschlußnaht 16 geschlossen. Die einzelnen Portionseinheiten 10 werden durch quergerichtete Trennschnitte von dieser Bahn abgetrennt. Eine Maschine zum Herstellen derartiger Portionseinheiten ist beispielshaft beschrieben in US 5 174 088.

Die insgesamt wasserlösliche Portionseinheit 10 kann in größeren Stückzahlen in verschließbaren Verpackungen, Dosen oder dergleichen Aufnahme finden. Es kann aber auch zweckmäßig sein, die Portionseinheiten 10 einzeln in feuchtigkeitsdichten Außenumhüllungen aus Folie, metallisierter Folie oder dergleichen zu verpacken. Diese Außenumhüllung wird zur Ingebrauchnahme der Portionseinheit 10 beseitigt.

## Patentansprüche

1. Portionseinheit zur Zubereitung von Kaffee- oder Teegetränken, wobei eine Portion eines wasserlöslichen Kaffee- oder Tee-Extrakts (12) im Wasser aufgelöst wird, mit den folgenden Merkmalen :
a) der Kaffee- oder Tee-Extrakt ist von einer Umhüllung (11) umgeben,
b) die Umhüllung (11) besteht aus einem im Wasser löslichen Material,
c) die Umhüllung (11) besteht ganz oder teilweise aus Milch und/oder Zucker und/oder Aromastoffe,
d) die Umhüllung (11) ist beutelartig ausgestaltet und besteht aus einem V-förmig gefalteten Zuschnitt mit einem Boden (13), zwei Seitennähten (14, 15) und einer oberen, quergerichteten Verschlußnaht (16).

## Claims

1. Portion unit for preparing coffee or tea drinks, a portion of a water-soluble coffee or tea extract (12) being dissolved in the water, having the following features:
a) the coffee or tea extract is enclosed by a sheath (11),
b) the sheath (11) consists of a water-soluble material,
c) the sheath (11) consists wholly or partially of milk and/or sugar and/or flavouring agents,
d) the sheath (11) is of bag-like configuration and comprises a blank which is folded in the form of a V and has a base (13), two side seams (14, 15) and a top, transversely directed closure seam (16).

## Revendications

1. Portion élémentaire de préparation de boissons à base de café ou de thé, une portion, d'un extrait soluble dans l'eau (12), de café ou de thé étant dissoute dans de l'eau, avec les caractéristiques suivantes :
a) l'extrait de café ou de thé est entouré d'une enveloppe (11),
b) l'enveloppe (11) est constituée d'un matériau soluble dans l'eau,
c) l'enveloppe (11) est constituée en tout ou partie de lait et/ou de sucre et/ou d'une substance aromatique,
d) l'enveloppe (11) a une forme de sachet et est constituée d'un flan plié en forme de V avec un fond (13), deux jointures latérales (14, 15) et une jointure de fermeture (16) supérieure disposée perpendiculairement.
